# EUROPÄISCHE PATENTSCHRIFT

(11) **EP 0 540 772 B1**
(45) Veröffentlichungstag und Bekanntmachung des Hinweises auf die Patenterteilung: **12.01.1994**
(21) Anmeldenummer: 91118865.4
(22) Anmeldetag: 06.11.1991
(51) Int. Cl.: C02F 1/50

(54) **Mittel zum Abtöten von Legionellen**
Product for exterminating Legionella
Produit pour l'extinction de Legionella

(43) Veröffentlichungstag der Anmeldung: 12.05.1993
(73) Patentinhaber: Neuhausen, Hubert F., D-60386 Frankfurt (DE)
(72) Erfinder: Neuhausen, Hubert F., D-60386 Frankfurt (DE)
(74) Vertreter: Gudel, Diether, Dr.

(56) Entgegenhaltungen:
- DE-A- 1 965 473
- GB-A- 2 178 960
- WORLD PATENTS INDEX LATEST Section Ch, Week 9109, Derwent Publications Ltd., London, GB; Class C, AN 065631

## Beschreibung

Die Erfindung betrifft ein Mittel zum Abtöten von Legionellen (Legionella pneumophila) in Trink- und Brauchwassersystemen.

Soweit bekannt, gibt es bisher kein Mittel, mit dem in Warmwasser-Kreisläufen lebende Legionellen (Legionella pneumophila) wirksam abgetötet werden können. Es besteht aber ein großer Bedarf an einem die Legionellen in Warmwasser-Kreisläufen abtötenden Mittel, weil in allen Haushaltungen, Krankenhäusern, Hotels und so fort Warmwasser-Kreisläufe vorliegen, in denen die Legionellen, gerade wegen der dort herrschenden, für sie angenehmen Temperaturen, gut gedeihen.

Eine gute Übersicht aus neuerer Zeit über die Bemühungen, Mittel zu finden, mit denen die Legionellen abgetötet werden können, steht in der Zeitschrift "Zentralblatt Hygiene", 190, 84-100 (1990). Dort wurden zur Sanierung eines mit Legionellen kontaminierten Warmwassersystems eines Krankenhauses verschiedene Dekontaminationsmaßnahmen durchgeführt, nämlich eine Temperaturerhöhung des Brauchwassers von anfänglich 55 - 60°C auf ca. 73°C, eine kurzzeitige Temperaturerhöhung des gesamten Systems auf über 70°C, eine Steigerung des täglichen Rückflußvolumens aus dem Warmwasser-Zirkulationssystem von anfänglich 30 cbm auf 120 cbm, die Installierung von UV-Durchflußreaktoren zur Bestrahlung des durchströmenden Warmwassers, und die Einleitung von CO₂ in das Warmwasser. Nur die Temperaturerhöhung auf ca. 73°C und die Steigerung des Rückflußvolumens erwiesen sich nach diesen Versuchen als erfolgreich. Es muß jedoch befürchtet werden, daß nach einer gewissen Zeit die in den Verkrustungen des Warmwassersystems nicht abgetöteten Legionellen sich wieder vermehren, so daß das System verhältnismäßig schnell wieder verseucht wird. Insbesondere die Bestrahlung mit UV-Licht, wodurch also an und für sich die Legionellen abgetötet werden sollten, wird dort ausdrücklich als unwirksam bezeichnet.

Zum Stand der Technik wird ergänzend verwiesen auf die folgenden Literaturstellen: US-A- 45 57 898; C.A. Bd.108, Referat 101 320 h (1988); Appl. Environ. Microbiol. Bd.54, S.741-747 (1988); Appl. Environ. Microbiol. Bd.53, S.447-453 (1987); S. Block, Desinfection, Sterilization and Preservation 1983, S.246. Diese beschreiben verschiedene Verfahren bzw. Mittel zum Abtöten von Legionellen unter Laborbedingungen. Diese Bedingungen sind aber nicht vergleichbar mit den in Brauchwassersystemen (Trinkwassersystemen) herrschenden Bedingungen: In derartigen Warmwassersytemen liegen die Legionellen nämlich nicht als solche vor (wie beispielsweise unter Laborbedingungen), sondern sie leben in Wirtskörpern (Amöben, Pantoffeltierchen usf). Würde man zum Abtöten der Legionellen nun beispielsweise Wasserstoffsuperoxid oder Ozon verwenden, wie dies in diesen Druckschriften vorgeschlagen wird, so würde praktisch kein Effekt eintreten. Bei diesen sogenannten natürlichen Legionellen würden diese Desinfektionsmittel nämlich das Eiweiß des Wirtskörpers gerinnen lassen (mit der Folge, daß das geronnene Eiweiß eine Schutzschicht für die Legionelle bilden würde, die dann nur noch schwerer abzutöten wäre). Der Einsatz der zitierten Desinfektionsmittel alleine wurde bei den hier in Rede stehenden Legionellen in natürlichem Vorkommen also zu keinem Erfolg führen. Er führt wohl unter Laborbedingungen zu Erfolgen, wie die Literatur belegt.

Der Erfindung liegt daher die Aufgabe zugrunde, ein Mittel vorzuschlagen, mit dem in Brauchwassersystemen lebende Legionellen wirksam und nachhaltig abgetötet werden können.

Die Lösung dieser Aufgabe besteht in einem Mittel zum Abtöten von Legionellen, das eine nicht ionogene, polykondensierte Phosphonsäure und ein damit verträgliches, oxidatives Desinfektionsmittel enthält, und zwar in zum Abtöten ausreichenden Dosierungen.

Der Erfindung liegt die Erkenntnis zugrunde, daß die Legionellen - dies sind ungewöhnlich kleine Bakterien - sich nicht nur in den Verkrustungen des Warmwassersystems (Kalkablagerungen usf.) aufhalten und dort thermisch isoliert sind, sondern auch in den Körpern von Wirttieren (Einzellern). Mit Hilfe der Phosphonsäure wird die Eiweißhaut der Einzeller aufgebrochen und die Legionelle wird freigelegt, so daß sie dem gleichzeitig erfolgenden Angriff des Desinfektionsmittels nicht standhalten kann und abgetötet wird. Die Phosphonsäure ist auch oberflächenaktiv, so daß mit Hilfe der Phosphonsäure auch solche Legionellen wirksam angegriffen werden können, die nicht in Einzellern leben, sondern die in Ablagerungen an den Wänden des Rohrsystems an und für sich relativ geschützt leben. Auch zu diesen, an und für sich schwer zugänglichen Stellen wird mit Hilfe der Phosphonsäure das Desinfektionsmittel getragen und entfaltet dort seine Wirksamkeit.

Erfindungsgemäß werden somit zwei sich synergistisch ergänzende Chemikalien gleichzeitig eingesetzt, nämlich zum einen die Phosphonsäure und zum anderen das Desinfektionsmittel. Beide Mittel unterstützen und ergänzen sich in synergistsischer Weise derart, daß die Erfindungsaufgabe gelöst wird. Die Anwesenheit der Phosphonsäure führt nämlich dazu, daß die Eiweißstruktur der Wirtskörper jetzt nicht mehr gerinnt, sondern zerstört wird. Die Legionelle liegt jetzt frei und kann dann wirksam abgetötet werden.

Versuche haben gezeigt, daß mit dem erfindungsgemäßen Mittel nicht nur die bis heute nicht wirksam bekämpfbaren Legionellen abgetötet werden, sondern auch allen anderen Bakterien, die in derartigen Warmwasser-Kreisläufen leben. Mit dem erfindungsgemäßen Mittel behandelte Warmwassersysteme waren anschließend keimfrei.

Die Phosphonsäure muß mit dem Desinfektionsmittel verträglich sein und auch umgekehrt, damit sich die beiden Mittel in ihrer Wirksamkeit nicht gegenseitig beeinträchtigen. Durch den geschilderten Mechanismus - Aufbrechen der Eiweißhaut der Einzeller - wird vielmehr ein synergetischer Effekt der beiden Mittel erzielt, indem die Phosphonsäure gewissermaßen die Vorarbeit leistet, so daß die in den Einzellern an und für sich geschützten Legionellen vom Desinfektionsmittel angegriffen werden können.

Die Dosen der beiden Mittel wird man so wählen, daß die Erfindungsaufgabe damit gelöst wird, nämlich daß die in dem betreffenden System vorhandenen Legionellen - und auch die anderen Bakterien - wirksam abgetötet werden. Hierzu reichen wenige Versuche aus, ggfs. im Laboratorium, wobei auch zu berücksichtigen ist, daß Laboratoriums-Legionellen in aller Regel nicht so widerstandsfähig sind wie die wild auftretenden Stämme, so daß man die Dosierung ggfs. etwas erhöhen muß.

Als derartiges Desinfektionsmittel eignet sich beispielsweise Wasserstoffsuperoxyd, Ozon oder Kaliumpermanganat. Alle diese drei Mittel sind mit der Phosphonsäure verträglich. Chlor ist als ausgezeichnetes Desinfektionsmittel bekannt, würde sich für das erfindungsgemäße Mittel aber nicht eignen, weil es nämlich nicht mit der Phosphonsäure verträglich ist.

Die eingesetzte Phosphonsäure ist umweltverträglich, oberflächenaktiv, biologisch abbaubar und zeichnet sich außerdem durch eine gute Schmutztragefähigkeit aus.

Versuche haben ergeben, daß die Phosphonsäure und das Desinfektionsmittel in einem Verhältnis von wenigstens 7,5 : 3 in dem Mittel enthalten sein sollen. Die Konzentration wird man je nach den gewählten Chemikalien im Sinne der Lösung der Erfindungsaufgabe einstellen und dosieren.

Ausgezeichnete Ergebnisse wurden bei einer Dosierung von 15 : 5 der Phosphonsäure im Verhältnis zu H₂O₂ erreicht. Der Rest des Mittels ist Wasser. Um die Transportmengen klein zu halten empfiehlt es sich, ein entsprechendes Konzentrat anzusetzen, das dann an Ort und Stelle entsprechend verdünnt wird. Die erwähnten Versuche wurden beispielsweise mit 30 Gew.% der Phosphonsäure und 10 Gew.% H₂O₂ durchgeführt und dieses Konzentrat wurde an Ort und Stelle im Verhältnis 1 : 1 mit Wasser verdünnt.

Es könnte sich zeigen, daß mit dem erfindungsgemäßen Mittel behandelte Legionellenstämme nach einer gewissen Zeit gegen das Mittel resistent oder doch weitgehend resistent werden. Für derartige Fälle mischt man dem Mittel zusätzlich ein Enzym bei, das bei pH-Werten kleiner als 1 wirksam ist. Enzyme zerstören bekanntlich Eiweiß und legen damit ebenfalls die im Wirt (Einzeller) befindlichen Legionellen frei, die dann von dem Desinfektionsmittel wirksam abgetötet werden.

Zur Vermeidung von Reinfektionen könnte als Dauerlösung eine permanente Zugabe von Ozon erwogen werden.

Der pH-Wert des Mittels sollte kleiner als 1 sein, um eine gute Wirksamkeit entfalten zu können.

Kern der Erfindung ist es somit, daß eine biologisch leicht abbaubare Säure in Verbindung und im richtigen Verhältnis mit einem oxidativ wirkenden Desinfektionsmittel zusammen zum Einsatz gebracht wird, wobei folgendes erreicht wird:
1. Ein vorher von Ablagerungen (Kalkablagerungen) gereinigtes System könnte noch Reste der Ablagerungen enthalten. Es wird also eine gewisse Fähigkeit, Ablagerungen zu lösen verlangt, sowie eine Schmutzabtragefähigkeit. Dies wird durch die Phosphonsäure erreicht.
2. Der pH-Wert sollte kleiner als 1 sein, um das Desinfektionsmittel oxidativ zu stabilisieren.
3. Die Dosierung der beiden Komponenten und die Auswahl der Mittel der beiden Komponenten wird von der Virulenz und der Stabilität der sehr unterschiedlich auftretenden Formen der Legionelle abhängig gemacht, wozu Laborversuche vorgeschaltet werden sollten.
4. Die einsusetzende Phosphonsäure muß gegen das oxidative Desinfektionsmittel stabil sein und umgekehrt. Die muß bei den zur Anwendung kommenden, ggfs. unterschiedlichen Konzentrationen der Fall sein. Auch müssen beide Mittel lagerfähig sein.

Grundvoraussetzung für die Anwendung des Mittels ist es, daß das zu desinfizierende System vorher gründlich gereinigt und von Kalk- und Rostablagerungen befreit ist. Erst danach kann eine wirkungsvolle Desinfektion erfolgen. Nach abgeschlossener Reinigung wird die Reinigungsflüssigkeit mit Wasser aus dem System gedrückt. Danach wird die Desinfektionslösung in das System eingebracht. Die Verweildauer sollte wenigstens 90 Minuten betragen.

Anschließend wird gründlich gespült und mit Natronlauge, 10%iger Sodalösung oder auch mittels Kalkmilch (abhängig von der Art des Systems) gespült werden. Die Neutralisierung mittels Kalkmilch ist vorzuziehen, weil sich bei längerer Verweildauer im Rohrsystem eine neue Schutzschicht aufbauen kann. In besonders hartnäckigen Fällen von Rostbildung kann das System auch über längere Zeit (mindestens 24 Studen) auf eine 0,5%ige Natriumsilikatlösung (Wasserglas) gestellt werden.

Bevorzugt wird als nicht ionogene, polykondensierte Phosphonsäure "Bayhibit AM" der Bayer AG.

## Patentansprüche

1. Mittel zum Abtöten von Legionellen (Legionella pneumophila) in Trink- und Brauchwassersystemen,enthaltend eine nicht ionogene, polykondensierte Phosphonsäure und ein damit verträgliches, oxidatives Desinfektionsmittel in zum Abtöten ausreichenden Dosierungen.

2. Mittel nach Anspruch 1,
**dadurch gekennzeichnet,**
daß das Desinfektionsmittel H₂O₂, O₃ oder Kaliumpermanganat ist.

3. Mittel nach Anspruch 1 oder 2,
**dadurch gekennzeichnet,**
daß der pH-Wert des Mittels in Anwendungskonzentration kleiner als 1 ist.

4. Mittel nach einem der Ansprüche 1 bis 3,
**dadurch gekennzeichnet,**
daß die Phosphonsäure und das Desinfektionsmittel in einem Verhältnis von wenigstens 7,5 : 3 in dem Mittel enthalten sind.

5. Mittel nach einem der Ansprüche 1 bis 4,
**dadurch gekennzeichnet,**
daß bei Verwendung von H₂O₂ als Desinfektionsmittel die Phosphonsäure und das Desinfektionsmittel in einem Verhältnis von etwa 15 : 5 vorliegen.

6. Mittel nach einem der Ansprüche 1 bis 5,
**dadurch gekennzeichnet,**
daß es zusätzlich ein bei pH-Werten kleiner als 1 wirksames Enzym in einer zum Abtöten ausreichenden Dosierung enthält.

## Claims

1. Agent to kill Legionellae (legionella pneumophila) in drinking water and industrial water systems, containing a non-ionogenic polycondensed phosphonic acid and an oxidative disinfectant in quantities sufficient for effective killing.

2. Agent as per claim 1,
characterized in that the disinfectant will be hydrogen peroxide, ozone or potassium permanganate.

3. Agent as per claims 1 and 2,
characterized in that the pH-Value of the agent in its concentration when actually used will be smaller than 1.

4. Agent as per claims 1 through 3,
characterized in that the agent will contain phosphonic acid and disinfectant at a ratio of at least 7.5 : 3.

5. Agent as per claims 1 though 4,
characterized in that the agent will, when hydrogen peroxide is being used as disinfectant, contain phosphonic acid and disinfectant at a ratio of approx. 15 : 5.

6. Agent as per claims 1 through 5,
characterized in that the agent additionally will contain an enzyme effective at pH-values smaller than 1 in quantities sufficient for effective killing.

## Revendications

1. Moyen pour tuer des légionnelles (Legionella pneumophila) dans des systèmes d'eau potable et d'eau industrielle qui contient un acide phosphonique polycondensé non ionogénique et un désinfectant oxidatif compatible avec cela en dosages suffisants pour la déstruction.

2. Moyen selon exigence 1,
**caractérisé du fait**
qu'il s'agit de H₂O₂, O₃ ou du permanganate de potassium.

3. Moyen selon exicenge 1 ou 2,
**caractérisé du fait**
que le degré d'acidité du moyen en concentration d'emploi est plus petit que 1.

4. Moyen selon les exigences de 1 à 3,
**caractérisé du fait**
que l'acide phosphonique et le désinfectant sont contenus dans le moyen dans une relation d'au moins 7,5 : 3,

5. Moyen selon une des exigences de 1 à 4,
**caractérisé du fait**
qu'en prenant H₂O₂ comme désinfectant l'acide phosphonique et le désinfectant sont pris dans une relation d'environ 15 : 5.

6. Moyen selon une des exigences de 1 à 5,
**caractérisé du fait**
qu'à la base des degrés d'acidité plus petit que 1 il contient en supplément une enzyme efficace dans un dosage suffisant pour la déstruction.
